# EUROPEAN PATENT APPLICATION

(11) **EP 1 933 524 A1**
(43) Date of publication of application: **18.06.2008**
(21) Application number: 06791208.9
(22) Date of filing: 08.10.2006
(51) Int. Cl.: H04L 29/06

(54) **SYSTEM FOR ETHERNET SUPPORTING THE TRANSMITTING OF THE SOURCE-SPECIFIC MULTICAST AND THE METHOD THEREOF**

(30) Priority: 09.10.2005 CN 200510108199
(71) Applicant: Huawei Technologies Co., Ltd., Longgang District Shenzhen 518129 (CN)
(72) Inventor: LI, Qiao, Guangdong 518129 (CN); WU, Haijun, Guangdong 518129 (CN)
(74) Representative: Hengelhaupt, Jürgen
(86) International application number: PCT/CN2006/002626
(87) International publication number: WO 2007/041942

(57) **Abstract**

A method for the Ethernet supporting the transmitting of the source-specific multicast. The main technique comprises: when the IP message of the source-specific multicast SSM is encapsulated based on the Ethernet, the source-specific virtual local area network SS-VLAN, which comprises the source IP address SIP information of the SSM multicast, is act as the VLAN tag, the transmitting of the SSM is carried through based on the Ethernet encapsulation. The present invention also discloses a router and Ethernet switcher. When the method and the device issued in this invention are applied, it may reduce the cost of the device and upgrade of the whole network, and is compatible in maximum degree with current device, reduce the investing cost of the provider.

## Description

### Field of the Invention

The present invention relates to the field of network communication technology, and in particular to a method for supporting source-specific multicast forwarding over Ethernet and a device thereof.

### Background of the Invention

In Source-Specific Multicast (SSM), a host joins a multicast group by employing Internet Group Management Protocol (IGMP) version 3 (v3). In a message in IGMP v3, not only the multicast group that the host will join is indicated by the host, but also Source (S), namely SIP (source of the multicast, which is identified by IP address of the source), of the multicast group that the host will join is indicated. The same multicast group from another SIP is not accepted by the host. With SSM, the forwarding needs to be controlled by a router on the basis of (S, G) (in which G, namely GIP, represents the multicast group, which is identified by IP address of group in an IP multicast message) so as to send, to the host, only the multicast message on the basis of specific S and G.

For an Ethernet switching device, the existing tow-layer multicast forwarding mechanism is based on virtual local area network (VLAN)+Destination MAC (DMAC) in Ethernet. The DMAC can be obtained by the router by mapping from the multicast IP address G. The mechanism of mapping from IP multicast to Media Access Control (MAC) multicast is that, when the router performs forwarding in multicast mode, a VLAN value of MAC encapsulation is obtained from an output route interface, with the same route interface employing a single VLAN, and the multicast MAC address encapsulated in the MAC is mapped from the multicast IP address G. In that way, the same multicast group G among different SIPs is mapped to the same VLAN+DMAC, resulting in that different forwarding host groups among different S may not be differentiated under the same group address and the SSM forwarding cannot be implemented during forwarding over Ethernet.

An obvious technical scheme for supporting SSM forwarding over Ethernet is that, the SSM forwarding is supported by the Ethernet switching device on the basis of (S, G). It is specifically implemented by the way that, in the Ethernet switching device, a forwarding table entry of (S, G) is added, a port list that is based on (S, G) is configured into the forwarding table entry of (S, G) by means of IGMP Snooping/Proxy, and the forwarding process is performed by looking up the (S, G) table for the IP message. Because a logical topology in tree form can be generated by running spanning tree protocol in Ethernet, the Ethernet switching device does not need to check the forwarding in a reverse path during (S, G) forwarding just like the router does.

However, it can be seen that, by employing the above technical scheme, hardware and software upgrade cost of the whole network is considerably increased, and existing equipments cannot be compatible with, thereby the investment cost of the operator is greatly increased. Therefore, the specific implementation is quite difficult. The existing technical scheme has the following disadvantages.

Specifically, the Ethernet switching device is a device on link layer, and only Ethernet encapsulation is handled in the forwarding plane. If the Ethernet switching device performs forwarding by employing (S, G), the forwarding mechanism of the Ethernet switching device and the protocol stack of the Ethernet switching device needs to be changed extremely.

Because the forwarding mechanism and protocol stack of the Ethernet switching device need be changed extremely, it is difficult for the existing equipment to meet the technical requirement. Therefore, the existing hardware devices need to be improved greatly, which increases the complexity of the equipment.

Furthermore, the existing Ethernet switching device that implements multicast forwarding cannot implement the technique only by upgrading the software.

### Summary of the Invention

In view of the disadvantages in the above prior art, an object of the present invention is to provide a method for supporting source-specific multicast forwarding over Ethernet and a device thereof, which, compared to the prior art, contributes to reducing the equipment cost and upgrade cost of the whole network, ensuring compatibility with the existing equipment to a great extent, and reducing the investment of the operator.

The object of the present invention is achieved through the following technical scheme.

The present invention provides a method for supporting source-specific multicast, SSM, forwarding over Ethernet, including: making a Source-Specific Virtual Local Area Network, SS-VLAN, include source IP, SIP, information of the SSM; using an SS-VLAN identifier as a VLAN identifier upon Ethernet encapsulation of an SSM IP message; and performing SSM forwarding on the basis of the Ethernet encapsulation.

Making the SS-VLAN include the SIP information includes: establishing correspondence relationship between the SIP and the SS-VLAN.

Establishing the correspondence relationship between the SIP and the SS-VLAN includes: establishing a mapping table between the SIP and the SS-VLAN; or establishing a HASH function between the SIP and the SS-VLAN.

The method includes steps of:
A. determining a Source-Specific Route Interface, SS-RIF, in accordance with a multicast route forwarding list when a router forwards an SSM IP message, and sending the SSM IP message to the interface.

Upon Ethernet encapsulation of the SSM IP message, corresponding SS-VLAN information is obtained on the basis of the SS-RIF and the SS-VLAN identifier is encapsulated into the IP message or an IGMP query message as the VLAN identifier, and then an encapsulated Ethernet multicast message is sent to an Ethernet switching device.

B. configuring, by the Ethernet switching device, a multicast forwarding port list in a multicast forwarding table entry on the basis of the SS-VLAN identifier and Destination Media Access Control, DMAC, address information, and sending the Ethernet multicast message to a corresponding port in accordance with the multicast forwarding port list.

The SS-RIF in step A is a route interface on a physical interface of the router connected to the Ethernet and configured on the basis of each SSM SIP, and each SS-RIF is configured with a corresponding SS-VLAN identifier.

The multicast route forwarding list in step A is set in accordance with an Internet Group Management Protocol, IGMP, uplink message and the IGMP query message, and MAC encapsulation of the IGMP uplink message is performed by employing the SS-VLAN identifier corresponding to the SIP in the IGMP uplink message before the IGMP uplink message is sent toward the router via the Ethernet switching device.

Configuring, by the Ethernet switching device, the multicast forwarding port list in the multicast forwarding table entry in step B includes:
B1. determining the SS-VLAN corresponding to the SIP in the IGMP message in accordance with the correspondence relationship between the SIP and the SS-VLAN upon performing IGMP Snooping/Proxy by the Ethernet switching device, and configuring the multicast forwarding port list in the multicast forwarding table entry of the Ethernet on the basis of the SS-VLAN identifier and the DMAC address corresponding to the multicast group IP, GIP, in the IGMP message.

The step B1 further includes: determining the SS-VLAN corresponding to each SIP if the IGMP message includes a plurality of SIPs; and configuring the multicast forwarding port list in corresponding multicast forwarding table entry of the Ethernet by employing each SS-VLAN identifier.

The present invention further provides a router, including: an Ethernet multicast message encapsulating module adapted to obtain SS-VLAN information corresponding to SIP in a multicast IP message upon Ethernet encapsulation of an SSM IP message forwarded by a router and to perform Ethernet encapsulation of the SSM IP message in accordance with the SS-VLAN information.

The router further includes: an SS-RIF configuring module adapted to configure an SS-RIF on a physical interface of the router connected to Ethernet on the basis of each SIP and to configure each SS-RIF with corresponding SS-VLAN information.

The present invention further provides an Ethernet switching device, including: a multicast forwarding port list configuring module adapted to obtain SS-VLAN information corresponding to an SIP in an IGMP message when the Ethernet switching device configures a multicast forwarding table entry, and to configure a multicast port forwarding list in the multicast forwarding table entry of Ethernet in accordance with the SS-VLAN information; and an Ethernet multicast message forwarding module adapted to send an Ethernet multicast message to a corresponding port in accordance with the multicast forwarding port list configured by the multicast forwarding port list configuring module when the Ethernet switching device receives the Ethernet multicast message forwarded by a router.

The Ethernet switching device further includes: an IGMP uplink message encapsulating module adapted to obtain SS-VLAN information corresponding to an SIP in an IGMP uplink message upon MAC encapsulation of the IGMP uplink message by the Ethernet switching device and to perform MAC encapsulation of the IGMP uplink message in accordance with the SS-VLAN information.

It can be seen from the above-mentioned technical scheme provided by the present invention that, it is readily enable the Ethernet switching device to support SSM forwarding by employing the method according to the present invention. The forwarding mechanism and the protocol stack of the existing Ethernet switching device are not needed to be modified. Only an IGMP Snooping component (usually implemented by software) in the edge Ethernet switching device needs to be modified. The Ethernet switching device may support the SSM without the router and the converged Ethernet switching device being modified. That is, there is no major hardware change. The edge Ethernet switching device may support the SS-VLAN through software upgrade.

Therefore, by employing the present invention, the device cost and upgrade cost of the whole network can be reduced, the compatibility with the existing device to a great extent can be ensured, and investment cost of the operator can be reduced compared to the prior art.

### Brief Description of the Drawings

Figure 1 is a flow chart of the method according to an embodiment of the present invention;

Figure 2 is a schematic diagram of the structure of the router according to an embodiment of the present invention;

Figure 3 is a schematic diagram of the structure of the Ethernet switching device according to an embodiment of the present invention; and

Figure 4 is a schematic diagram of a DSL access network that utilizes the method according to an embodiment of the present invention.

### Detailed Description of the Embodiments

According to the present invention, a VLAN of an Ethernet is made to include information about the SIP of the SSM. The VLAN with the information about the SIP of the SSM is referred to as a Source-Special VLAN (SS-VLAN). The Ethernet switching device configures a multicast forwarding port list on the basis of the SS-VLAN identifier and DMAC address. Upon the Ethernet encapsulation of an SSM IP message by the router, the SS-VLAN identifier is encapsulated into the message as a VLAN identifier, so that the Ethernet switching device is enabled to perform the SSM forwarding on the basis of SS-VLAN+DMAC.

The SS-VLAN is made to include the information about the SIP of the SSM by establishing correspondence relationship between the SIP and the SS-VLAN.

Further, the correspondence relationship is established by a method of configuring the SIP to a mapping table of the SS-VLAN, or by a method of a HASH function between the SIP and the SS-VLAN. Any other method can also be used.

In accordance with the method according to the embodiment of the present invention, in the router, a route interface is configured on a physical port connected to the Ethernet that is expected to support the SSM on the basis of the SIP of the SSM. The route interface associated with the SIP of the SSM is referred to as a Source-Special Route Interface (SS-RIF). Then, each SS-RIF is configured with corresponding information about the SS-VLAN in accordance with the correspondence relationship between the SIP and the SS-VLAN. Thereby, the correspondence relationship between the SIP and the SS-VLAN is established in the Ethernet switching device.

On the basis of the above setting, upon the Ethernet encapsulation by the router of a SSM IP message to be forwarded, the SS-VLAN identifier configured for the SS-RIF can be used as a VLAN identifier. The Ethernet switching device can set the Ethernet multicast forwarding table entry on the basis of the information about the SS-VLAN. The SS-VLAN identifier is used as the VLAN identifier upon MAC encapsulation of the IGMP uplink message.

For a further understanding of the above embodiment, detailed description is given as follows in conjunction with the accompanying drawings.

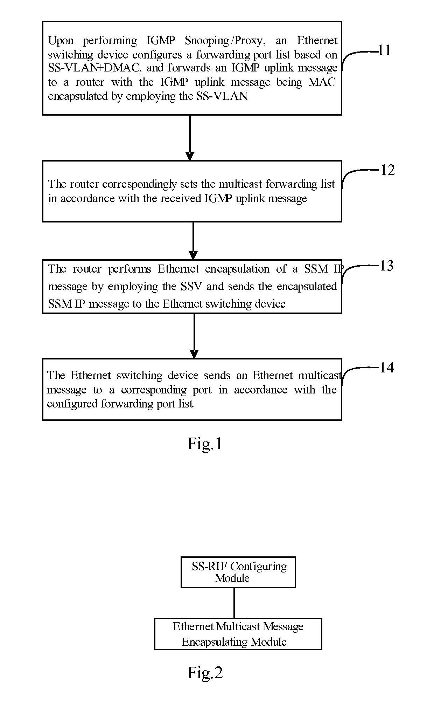

A specific embodiment of the method according to the embodiment of the present invention is shown in Fig.1. The method includes the following steps.

In step 11, upon performing IGMP Snooping/Proxy, the Ethernet switching device configures the forwarding port list on the basis of SS-VLAN+DMAC, and forwards the IGMP uplink message to the router with the IGMP uplink message being MAC encapsulated by employing the SS-VLAN identifier.

When the Ethernet switching device sets the forwarding port list upon performing the IGMP Snooping/Proxy, the SS-VLAN corresponding to the SIP that the host joins indicated in the IGMP message is determined according to the correspondence relationship between the SIP and the SS-VLAN that is established in the Ethernet switching device in advance. The Ethernet multicast forwarding table entry is configured on the basis of the SS-VLAN identifier and the DMAC address corresponding to the GIP that the host joins indicated in the IGMP message, and the forwarding port list in the Ethernet multicast forwarding table entry is set. If the IGMP message includes a plurality of SIPs, the corresponding table entry is configured by employing the corresponding SS-VLAN identifier for each of the SIPs.

In this manner, the Ethernet switching device can set different forwarding port lists on the basis of different SS-VLAN identifiers, so that different SIPs can be configured with the respective forwarding port lists.

If the IGMP message is an uplink message, when the Ethernet switching device forwards the IGMP uplink message (in the present invention, all IGMP messages sent from the host to the router is referred to as IGMP uplink messages) towards the router, the SS-VLAN corresponding to the SIP that the host joins indicated in the IGMP uplink message is determined, and the MAC encapsulation of the IGMP uplink message is performed by employing the SS-VLAN identifier. Then, the encapsulated message is reported to the router.

In step 12, after the router receives the IGMP uplink message, the corresponding SS-RIF is determined according to the SS-VLAN identifier in the message, and the multicast route forwarding list is correspondingly set according to that SS-RIF information and other information (such as an IGMP query message).

In step 13, upon the Ethernet encapsulation of the SSM IP message by the router, the SS-VLAN identifier is encapsulated into the message as the VLAN identifier.

When the router forwards the SSM IP message, the corresponding SS-RIF is determined according to the forwarding list in the multicast route forwarding table entry that is set, and the SSM IP message is sent to the SS-RIF.

Upon the Ethernet encapsulation by the router of the SSM IP message forwarded, the corresponding SS-VLAN information is obtained on the basis of the SS-RIF.

The SS-VLAN identifier is encapsulated in the Ethernet message as the VLAN identifier, and the encapsulated Ethernet multicast message is sent to the Ethernet switching device.

In step 14, the Ethernet switching device forwards the Ethernet multicast message on the basis of the SS-VLAN+DMAC forwarding port list that is set.

Upon the forwarding over the Ethernet after the Ethernet switching device receives the Ethernet multicast message sent by the router and encapsulated into the SS-VLAN identifier, the Ethernet multicast forwarding table entry set in advance is looked up in accordance with the SS-VLAN identifier and the DMAC information in the Ethernet multicast message so as to determine the corresponding Ethernet multicast forwarding port list. The Ethernet multicast message is forwarded to the corresponding port in accordance with the Ethernet multicast forwarding port list; and finally is sent to the corresponding user.

In this manenr, the multicast messages with different SS-VLAN identifiers corresponding to different SIPs can be forwarded to a respective group of ports, and hosts (users) connected to the ports can obtain the multicast information from the corresponding SIPs. Consequently, it is implemented that the Ethernet switching device supports the SSM forwarding.

The present invention further provides a router, as shown in Fig.2. The router according to an embodiment of the present invention includes an SS-RIF configuring module and an Ethernet multicast message encapsulating module.

The SS-RIF configuring module is adapted to configure an SS-RIF on the basis of each SIP and configure a corresponding SS-VLAN information for each SS-RIF on a physical interface of the router connected to Ethernet.

The Ethernet multicast message encapsulating module is adapted to obtain the SS-VLAN information corresponding to the SIP in a multicast IP message according to the SS-RIF that is set and perform Ethernet encapsulation process of an SSM IP message according to the SS-VLAN information upon the Ethernet encapsulation of the SSM IP message forwarded by the router.

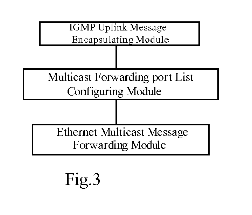

The present invention further provides an Ethernet switching device, as shown in Fig.3. The Ethernet switching device according to an embodiment of the present invention includes a multicast forwarding port list configuring module, an IGMP uplink message encapsulating module and an Ethernet multicast message forwarding module.

The multicast forwarding port list configuring module is used to obtain SS-VLAN information corresponding to SIP in an IGMP message and configure a multicast port forwarding list in Ethernet multicast forwarding table entry according to the SS-VLAN information if the Ethernet switching device is required to configure multicasting forwarding table entry.

The IGMP uplink message encapsulating module is adapted to obtain SS-VLAN information corresponding to SIP in an IGMP uplink message and perform MAC encapsulation process of the IGMP uplink message according to the SS-VLAN information upon the MAC encapsulation of the IGMP uplink message by the Ethernet switching device.

The Ethernet multicast message forwarding module is used to send an Ethernet multicast message to a corresponding port according to the multicast forwarding port list configured by the multicast forwarding port list configuring module when the Ethernet switching device receives the Ethernet multicast message forwarded by the router.

The Ethernet switching device according to the embodiment of the present invention refers to any device that utilizes Ethernet technique to perform forwarding, including, though not exclusively, an Ethernet switch, an Ethernet forwarding-based IP Digital Subscriber Line Multiplexer (DSLAM) and the like.

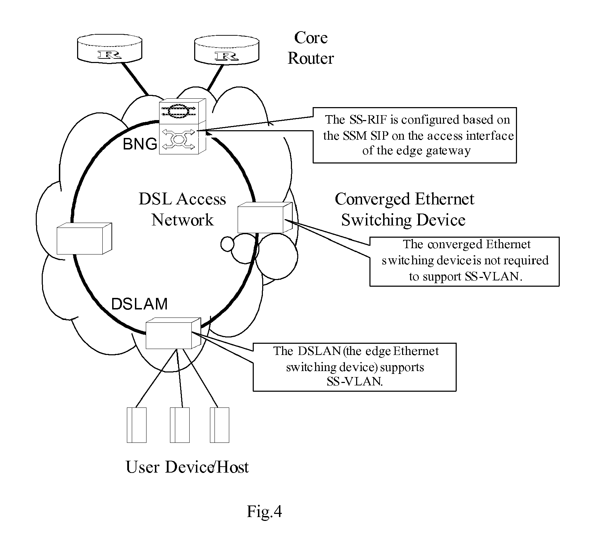

The present invention may be typically applied to a telecommunication access network. An access route interface of an edge Broadband Network Gateway (BNG) (including an edge router, a Broadband Remote Access Server (BRAS)) of the telecommunication access network is connected to a larger two-layer network. A multicast message is forwarded through the two-layer network over Ethernet. Finally, the multicast message is sent to a host by an edge Ethernet switching device (such as an IP DSLAM in a Digital Subscriber Line (DSL) access network, and a switch in a corridor in an Ethernet access network). In order to enable an access network to support SSM, the edge Ethernet switching device is required to support SS-VLAN. The SS-RIF is configured on the basis of the SSM SIP on the access route interface of the edge gateway. Because the edge Ethernet switching device and the edge gateway have encapsulated all IGMP messages and SSM messages to the SS-VLAN, the converged Ethernet switching device is not required to support the SS-VLAN, and the SSM forwarding can be implemented in accordance with the existing multicast forwarding method. A DSL access network that utilizes the method according to the embodiment of the present invention is shown in Fig.4.

The edge router refers to a router with a route interface that is directly connected to a host or connected to the host via an Ethernet bridging device. The access route interface refers to a route interface of an edge router, which is only connected to a host (or connected to the host via an Ethernet switching device) but is not connected to any router. The edge Ethernet switching device refers to an Ethernet switching device with a physical port directly connected to a host. The converged Ethernet switching device refers to an Ethernet switching device without any physical port that is directly connected to a host.

To sum up, in comparison with the prior art, the equipment cost and upgrade cost of the whole network may be reduced, the compatibility with the existing equipment to a great extent can be ensured, and the investment of the operator may be reduced.

While the present invention has been illustrated and described in conjunction with exemplary embodiments, the present invention is not limited to these. Those skilled in the art should recognize that various variations and modifications can be made without departing from the scope of the present invention as defined by the following claims.

## Claims

1. A method for supporting source-specific multicast, SSM, forwarding over Ethernet, comprising:
making a Source-Specific Virtual Local Area Network, SS-VLAN, comprise source IP, SIP, information of the SSM;
using an SS-VLAN identifier as a VLAN identifier upon Ethernet encapsulation of an SSM IP message; and
performing SSM forwarding on the basis of the Ethernet encapsulation.

2. The method according to claim 1, wherein making the SS-VLAN comprise the SIP information comprises:
establishing correspondence relationship between the SIP and the SS-VLAN.

3. The method according to claim 2, wherein establishing the correspondence relationship between the SIP and the SS-VLAN comprises:
establishing a mapping table between the SIP and the SS-VLAN; or
establishing a HASH function between the SIP and the SS-VLAN.

4. The method according to claim 1,2 or 3, comprising:
A. determining a Source-Specific Route Interface, SS-RIF, in accordance with a multicast route forwarding list when a router forwards an SSM IP message, and sending the SSM IP message to the interface,
wherein, upon Ethernet encapsulation of the SSM IP message, corresponding SS-VLAN information is obtained on the basis of the SS-RIF and the SS-VLAN identifier is encapsulated into the IP message or an IGMP query message as the VLAN identifier, and then an encapsulated Ethernet multicast message is sent to an Ethernet switching device;
B. configuring, by the Ethernet switching device, a multicast forwarding port list in a multicast forwarding table entry on the basis of the SS-VLAN identifier and Destination Media Access Control, DMAC, address information, and sending the Ethernet multicast message to a corresponding port in accordance with the multicast forwarding port list.

5. The method according to claim 4, wherein the SS-RIF in step A is a route interface on a physical interface of the router connected to the Ethernet and configured on the basis of each SSM SIP, and each SS-RIF is configured with a corresponding SS-VLAN identifier.

6. The method according to claim 4, wherein the multicast route forwarding list in step A is set in accordance with an Internet Group Management Protocol, IGMP, uplink message and the IGMP query message, and MAC encapsulation of the IGMP uplink message is performed by employing the SS-VLAN identifier corresponding to the SIP in the IGMP uplink message before the IGMP uplink message is sent toward the router via the Ethernet switching device.

7. The method according to claim 4, wherein configuring, by the Ethernet switching device, the multicast forwarding port list in the multicast forwarding table entry in step B comprises step of:
B1. determining the SS-VLAN corresponding to the SIP in the IGMP message in accordance with the correspondence relationship between the SIP and the SS-VLAN upon performing IGMP Snooping/Proxy by the Ethernet switching device, and configuring the multicast forwarding port list in the multicast forwarding table entry of the Ethernet on the basis of the SS-VLAN identifier and the DMAC address corresponding to the multicast group IP, GIP, in the IGMP message.

8. The method according to claim 7, wherein the step B 1 further comprises:
determining the SS-VLAN corresponding to each SIP if the IGMP message comprises a plurality of SIPs; and
configuring the multicast forwarding port list in corresponding multicast forwarding table entry of the Ethernet by employing each SS-VLAN identifier.

9. A router, comprising:
an Ethernet multicast message encapsulating module adapted to obtain SS-VLAN information corresponding to SIP in a multicast IP message upon Ethernet encapsulation of a SSM IP message forwarded by a router and to perform Ethernet encapsulation of the SSM IP message in accordance with the SS-VLAN information.

10. The router according to claim 9, further comprising:
a SS-RIF configuring module adapted to configure an SS-RIF on a physical interface of the router connected to Ethernet on the basis of each SIP and to configure each SS-RIF with corresponding SS-VLAN information.

11. An Ethernet switching device, comprising:
a multicast forwarding port list configuring module adapted to obtain SS-VLAN information corresponding to an SIP in an IGMP message when the Ethernet switching device configures a multicast forwarding table entry, and to configure a multicast port forwarding list in the multicast forwarding table entry of Ethernet in accordance with the SS-VLAN information; and
an Ethernet multicast message forwarding module adapted to send an Ethernet multicast message to a corresponding port in accordance with the multicast forwarding port list configured by the multicast forwarding port list configuring module when the Ethernet switching device receives the Ethernet multicast message forwarded by a router.

12. The Ethernet switching device according to claim 11, further comprising:
an IGMP uplink message encapsulating module adapted to obtain SS-VLAN information corresponding to an SIP in an IGMP uplink message upon MAC encapsulation of the IGMP uplink message by the Ethernet switching device and to perform MAC encapsulation of the IGMP uplink message in accordance with the SS-VLAN information.
